# EUROPÄISCHE PATENTANMELDUNG

(11) **EP 1 434 059 A2**
(43) Veröffentlichungstag der Anmeldung: **30.06.2004**
(21) Anmeldenummer: 03103647.8
(22) Anmeldetag: 02.10.2003
(51) Int. Cl.: G01S 7/282, H04B 1/48, H01P 1/15

(54) **Sende-/Empfangs-Umschalter für ein Pulsradar zur Verhinderung einer Frequenzdrift des Lokaloszillators**

(30) Priorität: 24.12.2002 DE 10261026
(71) Anmelder: ROBERT BOSCH GMBH, 70442 Stuttgart (DE)
(72) Erfinder: Hoetzel, Juergen, 61197, Florstadt (DE); Meier, Thomas, 75428, Illingen (DE)

(57) **Zusammenfassung**

Es wird ein Pulsradar, insbesondere für Kraftfahrzeuge zur Detektion von Objekten im Nahbereich, vorgeschlagen, mit einem Oszillator (10), dessen Mikrowellenleistung zum Teil einer Sendeantenne (15) und zum Teil einer Mischstufe (18) zugeführt und durch eine Schalteranordnung pulsförmig moduliert wird. Die Mischstufe (18) besitzt Mittel zur Erfassung der Verzögerung zwischen den abgestrahlten Signalen und den an einem Objekt reflektierten und über eine Empfangsantenne erfassten Signalen. Die Schalteranordnung wird durch zwei in Reihe geschaltete, sowohl die Leistungsaufteilung als auch die Pulsamplitudenmodulation vornehmende Umschalter (22, 23) gebildet. Hierdurch können eine weitgehende Reflexionsfreiheit und dementsprechend ein besserer Betrieb des Oszillators sowie eine geringere Abhängigkeit des Ein/Aus-Verhältnisses von der Quell- und Lastimpedanz erreicht werden.

## Beschreibung

### STAND DER TECHNIK

Die Erfindung betrifft ein Pulsradar, insbesondere für Kraftfahrzeuge zur Detektion von Objekten im Nahbereich, mit einem Oszillator, dessen Mikrowellenleistung zum Teil einer Sendeantenne und zum Teil einer Mischstufe zugeführt und durch eine Schalteranordnung pulsförmig moduliert wird, wobei die Mischstufe Mittel zur Erfassung der Verzögerung zwischen diesen pulförmig modulierten Signalen und den reflektierten und über eine Empfangsantenne erfassten Signalen vorgesehen sind.

Derartige Pulsradar-Geräte werden zum Beispiel in Kraftfahrzeugen als Einparkhilfe, als Precrash-Sensor und zur Detektion von Objekten im Bereich des sogenannten toten Winkels eingesetzt. Derartige Pulsradar-Geräte sind auch unter der Bezeichnung Shortrange-Radar (SRR) bekannt.

In bekannter Weise wird die vom Oszillator erzeugte Mikrowellenleistung durch einen Leistungsteiler auf zwei Zweige aufgeteilt, von denen der eine zur Sendeantenne und der andere zur Mischstufe führt. In diesen beiden Zweigen sind Ein/Aus-Schalter geschaltet, um getrennt für die Ansteuerung der Sendeantenne und der Mischstufe durch Takten die pulsförmige Modulation zu erzeugen.

Nachteilig an den bekannten Systemen sind vor allem die reflektierenden Eigenschaften der Ein/Aus-Schalter, das heißt, im Ausschaltfall wird ein großer Teil der zugeführten Mikrowellenleistung wieder über den Leistungsteiler in den Oszillator reflektiert. Entsprechend dem ungleichen Teileverhältnis (größter Teil ca. 2,5 dB im Sendezweig, kleinerer Teil ca. -8 dB im Mischerzweig) des Leistungsteilers sind die Reflexionen vom Schalter im Sendezweig besonders stark. Diese Reflexionen können den Betrieb des Oszillators beeinflussen, zum Beispiel durch unerwünschte Modulation von Trägerfrequenz und Leistung, wobei auch ein Anstieg des Amplituden- und Phasenrauschens möglich ist. Darüber hinaus geht die reflektierte Mikrowellenleistung für die Nutzung verloren.

### VORTEILE DER ERFINDUNG

Das erfindungsgemäße Pulsradar mit den Merkmalen des Anspruchs 1 hat den Vorteil, dass durch die beiden in Reihe geschalteten Umschalter sowohl die Leistungsaufteilung als auch die Pulsamplitudenmodulation realisiert werden können, sodass auf einen separaten Leistungsteiler verzichtet werden kann. Die Umschalter besitzen gegenüber den bekannten Ein/Aus-Schaltern eine weitgehende Reflexionsfreiheit, wodurch ein besserer Betrieb des Oszillators durch Vermeidung unerwünschter Modulationen sowie eine geringere Abhängigkeit des Ein/Aus-Verhältnisses von der Quell- und Lastimpedanz erreicht werden können. Die Realisierung durch in Reihe geschaltete Umschalter ist deshalb möglich, da das Tastverhältnis der pulsmodulierten Signale (Einschaltdauer / Periodendauer) sehr klein ist und weniger als 1/100 beträgt und beide Schalter zeitlich versetzt öffnen. Hierdurch kann die in einem Zweig nicht benötigte Leistung dem anderen Zweig zur Verfügung gestellt werden. Dadurch entstehen im Sendezweig ca. 2,5 dB mehr Leistung und im Mischerzweig ca. 5 dB mehr Leistung. Als Folge kann die Oszillatorleistung reduziert werden, was zu geringerem Stromverbrauch und weniger Leckstrahlung führt.

Durch die in den Unteransprüchen aufgeführten Maßnahmen sind vorteilhafte Weiterbildungen und Verbesserungen des im Anspruch 1 angegebenen Pulsradars möglich.

In einer vorteilhaften ersten Ausgestaltung der Schalteranordnung ist die Reihenschaltung der beiden Umschalter zwischen den Oszillator und einen Abstandswiderstand geschaltet, wobei ein Schaltanschluss des einen Umschalters mit der Sendeantenne und ein Schaltanschluss des anderen Umschalters mit der Mischstufe verbunden ist. Im Ruhezustand ist dabei der Oszillator direkt auf den Abschlusswiderstand durchgeschaltet. Durch Umlegen eines der Umschalter wird die Mikrowellenleistung der Sendeantenne oder einem Lokaloszillatoreingang der Mischstufe zugeführt.

In einer zweiten vorteilhaften Ausgestaltung ist ein Schaltanschluss des mit dem Oszillator verbundenen Umschalters mit einem Abschlusswiderstand und der andere Schaltanschluss mit dem zweiten Umschalter verbunden, der zur Umschaltung zwischen Sendeantenne und Mischstufe geschaltet ist. Durch den ersten Schalter wird bei dieser Ausführung die Pulsamplitudenmodulation durchgeführt, und der zweite Umschalter dient zur Aufteilung der pulsmodulierten Signale auf den Sendezweig und den Mischerzweig. Der Vorteil dieser Variante besteht insbesondere darin, dass im ausgeschalteten Fall der Signalweg vom Oszillator zur Sendeantenne und zur Mischstufe doppelt unterbrochen ist. Dadurch wird eine besonders gute Sperrdämpfung erreicht, was wiederum im Hinblick auf parasitäre Dopplerempfindlichkeit von Vorteil ist. Unter parasitärer Dopplerempfindlichkeit versteht man folgenden Vorgang: Da weder der Signalweg vom Oszillator zur Sendeantenne noch der vom Oszillator zur Mischstufe vollständig durch die Schalter aufgetrennt werden kann, wird immer eine gewisse Dauerträgerleistung über die Sendeantenne abgestrahlt bzw. dem Lokaloszillatoreingang der Mischstufe zugeführt. Dies führt dazu, dass bewegte Objekte ein Dopplersignal am Mischerausgang erzeugen, was dem gewünschten Pulsechosignal überlagert ist und die Signalauswertung behindert.

Zwischen den Umschaltern und/oder zwischen dem Oszillator und dem damit verbundenen Umschalter und/oder zwischen der Sendeantenne und dem damit verbundenen Umschalter und/oder zwischen der Mischstufe und dem damit verbundenen Umschalter sind zweckmäßigerweise Kopplungskondensatoren geschaltet.

In einer bevorzugten Ausgestaltung der Umschalter besitzt jeder dieser Umschalter eine Leitungsverzweigung, wobei an jede der beiden Leitungsverzweigungen, die zu den Schaltanschlüssen des Umschalters führen, eine mit einer Schaltdiode versehene Stichleitung angeschlossen ist. Dabei besitzen die Stichleitungen unterschiedliche Längen und sind so bemessen, dass bei stromdurchflossenen Schaltdioden die eine Stichleitung als Leerlauf und die andere Stichleitung als Kurzschluss wirkt, während die Verhältnisse bei stromlosen Schaltdioden umgekehrt sind.

Die Schaltdioden sind zweckmäßigerweise als GaAs-Dioden ausgebildet.

### ZEICHNUNG

Ausführungsbeispiele der Erfindung sind in der Zeichnung dargestellt und in der nachfolgenden Beschreibung näher erläutert. Es zeigen:
- Figur 1: eine schematische Gesamtdarstellung eines Pulsradars gemäß dem Stand der Technik,
- Figur 2: ein erstes Ausführungsbeispiel einer Reihenschaltung von Umschaltern zur Leistungsaufteilung und zur Pulsamplitudenmodulation in einer schematischen Darstellung,
- Figur 3: dasselbe Ausführungsbeispiel in einer konkreten Ausführung und
- Figur 4: ein zweites Ausführungsbeispiel einer Reihenschaltung von Umschaltern zur Leistungsaufteilung und zur Pulsamplitudenmodulation.

### BESCHREIBUNG DER AUSFÜHRUNGSBEISPIELE

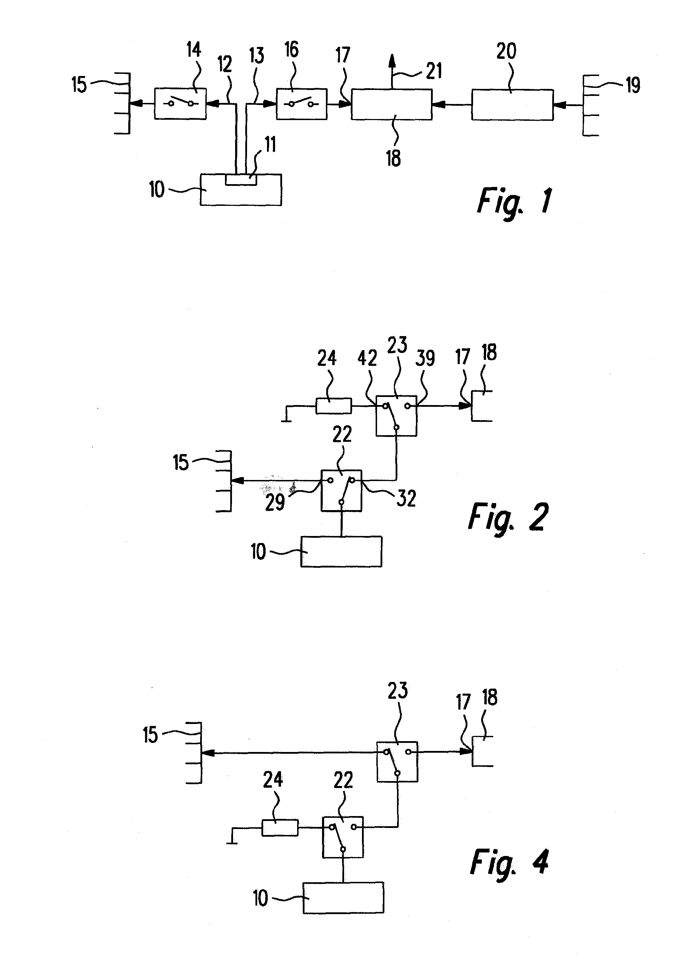

Das in Figur 1 dargestellte Pulsradar bzw. Pulsradar-Gerät kann beispielsweise im Kraftfahrzeug zur Detektion von Objekten im Nahbereich eingesetzt werden. Einsatzmöglichkeiten sind zum Beispiel die Verwendung als Einparkhilfe, als Precrash-Sensor oder zur Detektion von Objekten im toten Winkel.

Ein Oszillator 10 erzeugt einen Mikrowellenträger mit einer Frequenz von üblicherweise 24,125 GHz. Mittels eines Leistungsteilers 11 wird die Oszillator- bzw. Mikrowellenleistung auf einen Sendezweig 12 und einen Mischerzweig 13 aufgeteilt. Im Sendezweig 12 wird der eine Teil der Mikrowellenleistung mittels eines ersten Schalters pulsförmig moduliert und einer Sendeantenne 15 zugeführt, wobei selbstverständlich auch mehrere Sendeantennen vorgesehen sein können. Ein weiterer Teil der Mikrowellenleistung wird im Mischerzweig 13 durch einen zweiten Schalter 16 ebenfalls pulsförmig moduliert und in den sogenannten Lokaloszillatoreingang 17 einer Mischstufe 18 eingespeist. Bei den die Pulsamplitudenmodulation vornehmenden Schaltern 14 und 16 handelt es sich um Ein/Aus-Schalter.

Eine zeitliche Verzögerung zwischen Sende- und Lokaloszillatorpulsen ist durch entsprechende Ansteuerung der Schalter 14, 16 definiert einstellbar. Treffen die über die Sendeantenne 15 abgestrahlten Signale auf ein reflektierendes Objekt, so gelangt ein Teil der abgestrahlten Mikrowellenleistung auf eine Empfangsantenne 19, wobei auch hier wiederum mehrere Empfangsantennen vorgesehen sein können. Die von der Empfangsantenne 19 empfangenen Signale werden über einen Vorverstärker 20 dem HF-Eingang der Mischstufe 18 zugeführt. In der Mischstufe 18 werden dann die am Lokaloszillatoreingang 17 anliegenden und die empfangenen Signale miteinander verglichen, und es wird ein Ausgangsimpuls erzeugt, wenn der reflektierte Sendeimpuls und der Lokaloszillator-Impuls gleichzeitig anliegen. Die Suche nach Objekten in einem bestimmten Entfernungsbereich geschieht durch Variation der Verzögerungszeit zwischen Sende- und Lokaloszillator-Impulsen. Durch repetierende Messung ist eine Integration der am Mischerausgang 21 auftretenden Spannungspulse, beispielsweise durch Aufladen eines Kondensators, möglich, wodurch ein verbessertes Signal-Rausch-Verhältnis sowie eine niederfrequente Signalauswertung möglich werden. Die im Folgenden in Ausführungsbeispielen beschriebene Erfindung betrifft den Teil des Pulsradars, in dem die Aufteilung der Oszillatorleistung auf Sende- und Mischerzweig sowie die Pulsamplitudenmodulation erfolgt.

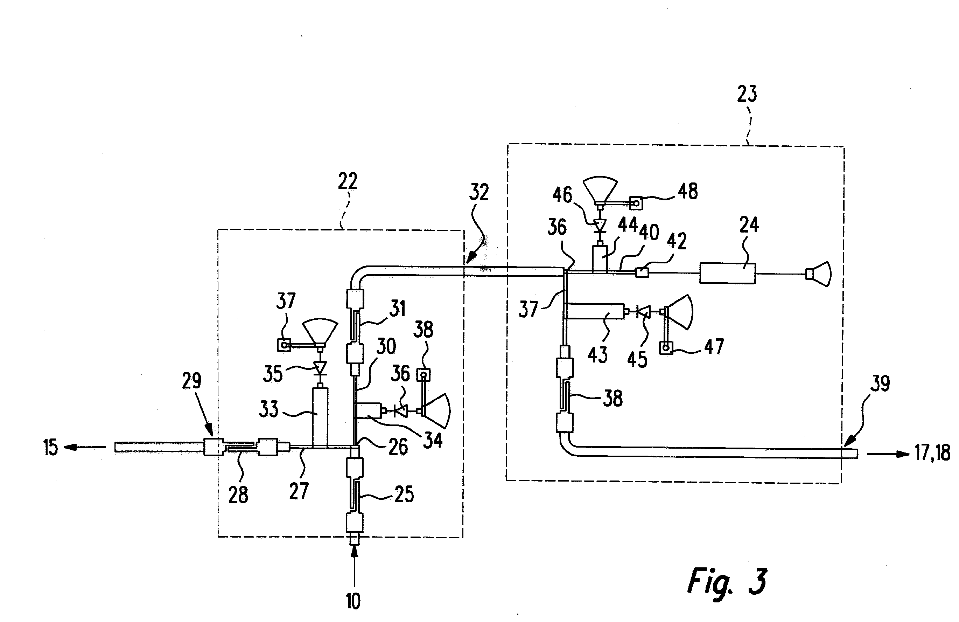

Bei dem in den Figuren 2 und 3 dargestellten ersten Ausführungsbeispiel ist der Ausgang des Oszillators 10 mit einer Reihenschaltung zweier Umschalter 22, 23 verbunden. Durch den ersten Umschalter 22 kann die Oszillatorleistung entweder der Sendeantenne 15 oder dem zweiten Umschalter 23 zugeführt werden, während durch diesen eine Umschaltung der vom ersten Umschalter 22 zugeführten Oszillatorleistung entweder auf den Lokaloszillatoreingang 17 der Mischstufe 18 oder einen Abschlusswiderstand 24 geschaltet werden kann.

In dem in Figur 2 dargestellten Ruhezustand ist der Oszillator 10 direkt auf den Abschlusswiderstand 24 durchgeschaltet. Durch Umlegen bzw. Takten einer der Umschalter wird die Mikrowellenleistung entweder der Sendeantenne 15 oder der Mischstufe 18 zugeführt. Da dies bei einem sehr kleinen Tastverhältnis der Umschalter 22, 23 von beispielweise weniger als 1/100 zeitverzögert erfolgt, wie dies bereits erläutert worden ist, sind im Allgemeinen keine Kollisionen zu befürchten. Sollten dennoch beide Pulse zeitgleich anliegen, so hat der Umschalter 22, also die Zuführung der Sendeleistung zur Sendeantenne 15, Priorität.

Alternativ hierzu kann die Abzweigung der Oszillatorsignale für die Mischstufe auch vor der Abzweigung der Sendesignale liegen.

In Figur 3 ist eine konkrete Ausführung der Schaltung gemäß Figur 2 dargestellt. Die Oszillatorleistung wird dem Umschalter 22 über einen Koppelkondensator 25 zugeführt. Ab einem Verzweigungspunkt 26 geht ein erster Signalweg 27 über einen weiteren Koppelkondensator 28 zu einem ersten Schaltanschluss 29 des Umschalters 22 und ein zweiter Signalweg 30 über einen weiteren Koppelkondensator 31 zu einem zweiten Schaltanschluss 32 des Umschalters 22. An den ersten Signalweg 27 ist eine erste Stichleitung 33 und an den zweiten Signalweg 30 eine zweite Stichleitung 34 angeschlossen. Die Enden der Stichleitungen 33, 34 sind über beispielsweise als GaAs-Dioden ausgebildete Schaltdioden 35, 36 mit dem Substrat der entsprechenden Schaltungsplatine verbunden. Die Schaltdioden 35, 36 können über entsprechende Steuereinrichtungen 37, 38 stromleitend oder stromsperrend geschaltet werden.

Die Stichleitungen 33, 34 weisen unterschiedliche Längen auf, wobei die Längen so festgelegt sind, dass die erste Stichleitung 33 im stromdurchflossenen Fall wie ein Leerlauf wirkt, während die zweite Stichleitung 34 als Kurzschluss wirkt. Dadurch ist im stromdurchflossenen Fall der Schaltweg zum ersten Schaltanschluss 29 geöffnet und der Schaltweg zum zweiten Schaltanschluss 32 gesperrt. Im stromlosen Fall der Schaltdioden 35, 36 ist dies umgekehrt. Damit der jeweilige Kurzschluss den durchgesteuerten Schaltweg nicht beeinflusst, wird er bis zum Verzweigungspunkt 26 wieder in einen Leerlauf transformiert. Hierdurch wird ein sehr geringer Reflexionsfaktor von weniger als 10 dB erreicht.

Der zweite Umschalter 23 ist entsprechend aufgebaut. Die sich entsprechenden Bauteile tragen jeweils ein um die Zahl "20" erhöhtes Bezugszeichen. Ein eingangsseitiger Koppelkondensator kann im Hinblick auf den ausgangsseitigen Koppelkondensator 31 des Umschalters 22 entfallen. Weiterhin kann ein Koppelkondensator am zweiten Signalweg 40 entfallen, da dieser über einen Anschluss 42 mit dem Abschlusswiderstand 24 verbunden ist. Der Anschluss 42 ist quasi ein interner Schaltanschluss, der selbstverständlich auch als externer Anschluss ausgebildet sein kann, wenn der Abschlusswiderstand 24 extern angeordnet ist.

Bei dem in Figur 4 dargestellten zweiten Ausführungsbeispiel dient der erste Umschalter 22 allein zur Pulsamplitudenmodulation des Oszillatorsignals. Er dient zur Umschaltung zwischen dem am ersten Schaltanschluss angeschlossenen Abschlusswiderstand 34 und dem am zweiten Schaltanschluss angeschlossenen zweiten Umschalter 23. Dieser dient zur Umschaltung der pulsmodulierten Signale zwischen der Sendeantenne 15 und dem Lokaloszillatoreingang 17 der Mischstufe 18. Die Umschalter 22, 23 können auch bei diesem Ausführungsbeispiel entsprechend Figur 3 ausgebildet sein.

## Patentansprüche

**1.** Pulsradar, insbesondere für Kraftfahrzeuge zur Detektion von Objekten im Nahbereich, mit einem Oszillator, dessen Mikrowellenleistung zum Teil einer Sendeantenne und zum Teil einer Mischstufe zugeführt und durch eine Schalteranordnung pulsförmig moduliert wird, wobei die Mischstufe Mittel zur Erfassung der Verzögerung zwischen den abgestrahlten Signalen und den an einem Objekt reflektierten und über eine Empfangsantenne erfassten Signalen aufweist, **dadurch gekennzeichnet, dass** die Schalteranordnung durch zwei in Reihe geschaltete, sowohl die Leistungsaufteilung als auch die Pulsamplitudenmodulation vornehmende Umschalter (22, 23) gebildet wird.

**2.** Pulsradar nach Anspruch 1, **dadurch gekennzeichnet, dass** die Reihenschaltung der beiden Umschalter (22, 23) zwischen den Oszillator (10) und einen Abschlusswiderstand (24) geschaltet ist, wobei ein Schaltanschluss (29) des einen Umschalters (22) mit der Sendeantenne (15) und ein Schaltanschluss (39) des anderen Umschalters (23) mit der Mischstufe (18) verbunden ist.

**3.** Pulsradar nach Anspruch 1, **dadurch gekennzeichnet, dass** ein Schaltanschluss des mit dem Oszillator (10) verbundenen Umschalters (22) mit einem Abschlusswiderstand (24) und der andere Schaltanschluss mit dem zweiten Umschalter (23) verbunden ist, der zur Umschaltung zwischen Sendeantenne (15) und Mischstufe (18) geschaltet ist.

**4.** Pulsradar nach einem der vorhergehenden Ansprüche, **dadurch gekennzeichnet, dass** zwischen den Umschaltern (22, 23) und/oder zwischen dem Oszillator (10) und dem damit verbundenen Umschalter (22) und/oder zwischen der Sendeantenne (15) und dem damit verbundenen Umschalter (22; 23) und/oder zwischen der Mischstufe (18) und dem damit verbundenen Umschalter (23) Kopplungskondensatoren (25, 28, 31, 38) geschaltet sind.

**5.** Pulsradar nach einem der vorhergehenden Ansprüche, **dadurch gekennzeichnet, dass** jeder Umschalter (22, 23) eine Leitungsverzweigung (26, 36) besitzt und an jede der beiden Verzweigungsleitungen (27, 30; 37, 40), die zu den Schaltanschlüssen (29, 32; 39, 42) der Umschalter (22, 23) führen, eine mit einer Schaltdiode (35, 36; 45, 46) versehene Stichleitung (33, 34; 43, 44) angeschlossen ist.

**6.** Pulsradar nach Anspruch 5, **dadurch gekennzeichnet, dass** die Stichleitungen (33, 34; 43, 44) unterschiedliche Längen aufweisen und so bemessen sind, dass bei stromdurchflossener Schaltdiode (35, 36; 45, 46) die eine Stichleitung (33; 43) als Leerlauf und die andere Stichleitung (34, 44) als Kurzschluss wirkt, während die Verhältnisse bei stromloser Schaltdiode (35,36; 45, 46) umgekehrt sind.

**9.** Pulsradar nach Anspruch 5 oder 6, **dadurch gekennzeichnet, dass** die Schaltdioden (35, 36; 45, 46) als GaAs-Dioden ausgebildet sind.
